## Europäisches Patentamt
## European Patent Office
## Office européen des brevets

(11) Publication number: **0 161 726**
**B1**

---

# EUROPEAN PATENT SPECIFICATION

(45) Date of publication of patent specification: **18.07.90**

(51) Int. Cl.⁵: **A 01 F 15/00**

(21) Application number: **85200748.3**

(22) Date of filing: **10.05.85**

---

(54) Round baler.

---

(30) Priority: **18.05.84 US 612100**
**18.05.84 US 612101**

(43) Date of publication of application:
**21.11.85 Bulletin 85/47**

(45) Publication of the grant of the patent:
**18.07.90 Bulletin 90/29**

(84) Designated Contracting States:
**DE FR GB IT**

(56) References cited:
**FR-A-2 448 282**
**GB-A-2 150 490**
**GB-A-2 150 492**
**US-A-3 722 197**
**US-A-4 169 347**
**US-A-4 198 804**
**US-A-4 470 247**

(73) Proprietor: **FORD NEW HOLLAND N.V.**
**Leon Claeysstraat 3a**
**B-8210 Zedelgem (BE)**

(72) Inventor: **Decoene, Frans J.G.C.**
**Ruddervoordestraat 19**
**B-8210 Zedelgem (BE)**
Inventor: **Vansteelant, Marc G.**
**Groenestraat 61**
**B-8210 Zedelgem (BE)**

(74) Representative: **Vandenbroucke, Alberic T.J.**
**et al**
**FORD NEW HOLLAND N.V. Leon Claeysstraat 3A**
**B-8210 Zedelgem (BE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates generally to roll baling machines, typically referred to as round balers which form cylindrical roll bales of crop material.

US—A—4.198.804 discloses a conventional type of round baler having a two part frame with rollers extending transversely between the side walls of the frame. The rollers are stationarily mounted on the frame to define a generally cylindrical baling zone which has a fixed diameter. The two parts of the baler frame are pivotally connected so that the baling zone may be opened to discharge a bale therefrom. A disadvantage of this type of baler is that it is often difficult and sometimes impossible to form bales when working in short brittle crop material. Another disadvantage is that the bales produced with this type of baler have a soft core and often have a low density.

Another type of round baler such as shown in US—A—3.722.197 and EP—A—0.037.155 and generally referred to as a round baler with an expandable bale chamber, typically has an expandable baling zone. When bale formation is started, the baling zone has reduced dimensions defining a bale starting chamber for facilitating the start of the bale formation or the so-called core-forming. During bale formation the bale chamber gradually expands as the bale being formed in the bale chamber grows. Ultimately the bale chamber reaches its maximum diameter cylindrical shape when the bale being formed reaches completion.

Such a baler usually is more complicated in design and more expensive in manufacture. However, such a baler has the advantage of being able to produce bales of a more uniform and higher density.

Furthermore and as far as the variable chamber round baler according to EP—A—0.037.155 is concerned, this baler also has the additional disadvantage that, during bale formation and when the bale chamber is in an intermediate position, the active bale forming rollers are spaced too far apart for this bale formation to be accomplished smoothly and without any hesitation. It indeed may occur that crop material passes inbetween adjacent active bale forming rollers and causes plugging or otherwise is lost.

It is therefore the objective of the present invention to provide a round baler combining, on the one hand, the advantages of both the fixed chamber and the expandable chamber type round balers while, on the other hand, eliminating the disadvantages thereof. More specifically, it is the objective to provide a round baler which is simple in design and relatively inexpensive in manufacture and which furthermore allows the formation of bales with a more or less constant density throughout the entire diameter thereof. This density. is much more easily controllable by the operator and, at wish, may be made much higher than normally is the case with bales formed with so-called fixed chamber round balers. At the same time, bales formed with a baler according to the present invention may have the nice and smooth finish which is typical for bales formed with fixed chamber round balers.

According to the present invention a variable chamber round baler is provided having a bale chamber which is expandable from a bale starting position wherein the bale chamber has reduced dimensions to a full bale position wherein the bale chamber is generally cylindrical in shape; said baler comprising:

first bale forming means disposed at fixed positions generally circumferentially around a portion of the generally cylindrical full size bale chamber when the baler is in its bale forming condition and,

at least one arm structure mounted for pivotal movement between an inner, bale starting position and an outer, full bale position and carrying second bale forming means; said second bale forming means, when positioned in the full bale position, cooperating with the first bale forming means to define said generally cylindrical full size bale chamber, and being characterized in that:

the second bale forming means comprise a plurality of transversely extending rollers disposed in a generally arcuately shaped pattern in side-by-side relationship adjacent to each other; said generally arcuately shaped pattern generally conforming to a portion of said generally cylindrical shape of the full size bale chamber and said rollers of the second bale forming means, in effect, forming a generally continuous bale forming surface engaging the circumference of a bale during its formation in the bale chamber, and

the second bale formino means cooperate with only part of the first bale forming means to form said bale starting chamber of reduced dimensions.

Preferably the first bale forming means equally are formed by a plurality of transversely extending rollers; said rollers being rotatably mounted at fixed positions on the baler. The arm structure comprises a pair of arms, each pivoted at one end on the baler, and transverse beams interconnecting the arms at spaced apart locations along the length thereof to form a rigid frame of generally rectangular shape as seen in a direction perpendicular to its main dimensions. The arms are generally arcuate in shape when seen in side view. The second bale forming means extend transversely between the opposed arms; the rollers thereof being rotatably mounted on said arms.

As is conventional on round balers, the round baler according to the present invention also comprises a base frame and a movable subframe pivotally connected thereto for movement between a bale forming position and a bale discharge position.

In one embodiment of the present invention, the arm structure with the second bale forming means thereon, is pivotally mounted on the base frame. At least some of the bale forming rollers of the first bale forming means are mounted at fixed positions on the movable subframe. The arm structure is movable between a retracted, generally fore-and-aft extending position defining, in part, an elongated generally horizontally oriented bale starting chamber and a generally upright position defining together with the first bale forming means the full size cylindrical bale chamber.

In another embodiment of the present invention, the arm structure with the second bale forming means thereon, is pivotally mounted on the movable subframe and at least some of the bale forming rollers of the first bale forming means are mounted at fixed positions on the base frame. The arm structure is movable between a retracted generally upright position defining in part, an elongated, generally upright oriented bale starting chamber, and an extended position defining together with the first bale forming means the full size cylindrical bale chamber.

Round balers embodying the present invention will now be described in greater detail by way of example with reference to the accompanying drawings, in which:

Fig. 1 is a side elevational view of a round baler according to one embodiment of the present invention taken when the baler is empty;

Fig. 2 is a side elevational view of the baler of Fig. 1 taken when the baler has formed a bale;

Fig. 3 is a side elevational view of the baler of Figs. 1 and 2 during discharge of a bale therefrom;

Fig. 4 is a view similar to Fig. 3 showing a modification of the baler of Fig. 1;

Fig. 5 is a side elevational view of a round baler according to another embodiment of the present invention taken when the baler is empty; and

Fig. 6 is a side elevational view of the baler of Fig. 5 during discharge of a bale therefrom.

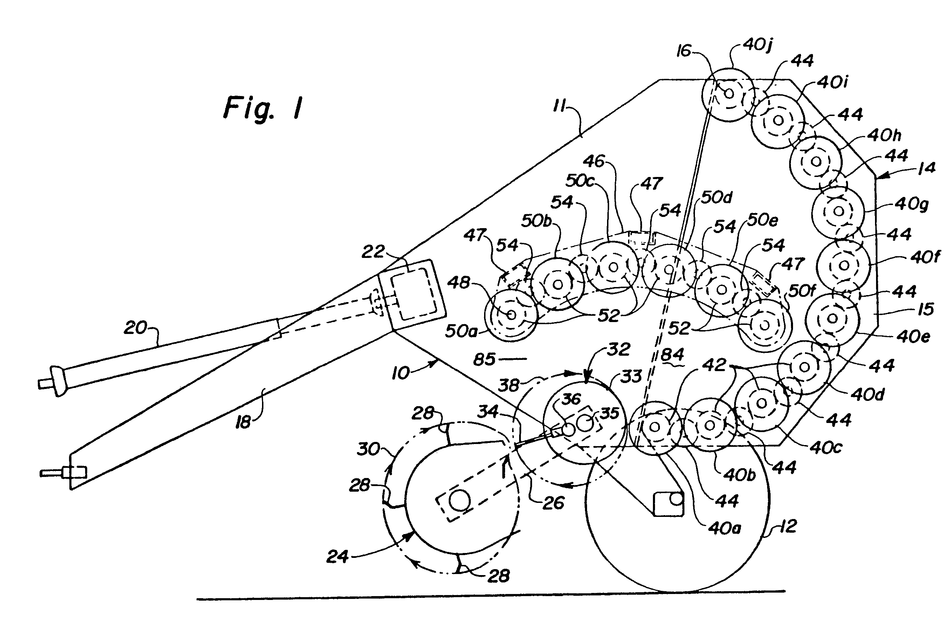

Referring to Fig. 1, a round baler according to one embodiment of the present invention includes a base frame 10 supported by a pair of wheels 12 and a rear movable subframe 14 pivotally connected to the base frame 10 by stub shafts 16 mounted in suitable bearings. The side walls 11 of the base frame 10 are generally triangular in shape, and the side walls 15 of the rear frame 14 are generally trapezoidal in shape. A tongue 18 is provided on the forward end of the base frame 10 for connection to a towing vehicle such as a tractor (not shown). A drive shaft 20 is adapted for connection at one end to the PTO of the tractor and at the other end to a gearbox 22 carried on the base frame 10.

A pickup 24 extends transversely of the base frame 10 and is supported by brackets 26 which are attached to the side walls 11 of the base frame 10. The pickup 24 includes a series of fingers or tines 28 movable in a path designated 30. A feeder drum 32 is rotatably mounted on the base frame 10 and extends transversely between the sidewalls 11 thereof. The feeder drum 32 includes a cylinder 33 and a plurality of fingers 34 mounted on a shaft 36 that is eccentrically offset with respect to the shaft 35 on which the cylinder 33 is mounted. As the cylinder 33 is rotated by the shaft 35, the fingers 34 retract into and project from openings in the cylinder 33. The tips of the fingers 34 follow a path designated 38.

A set of rollers 40a through 40j is rotatably mounted at fixed positions in the rear frame 14 and extend transversely between the side walls 15 of the rear frame 14. Spur gears 42 are fixed to one end of each of the rollers 40a to 40j outside the adjacent side wall 15, and intermediate gears 44 are rotatably mounted on the outside of the same side wall 15 of the rear frame 14 in intermeshing engagement with the spur gears 42.

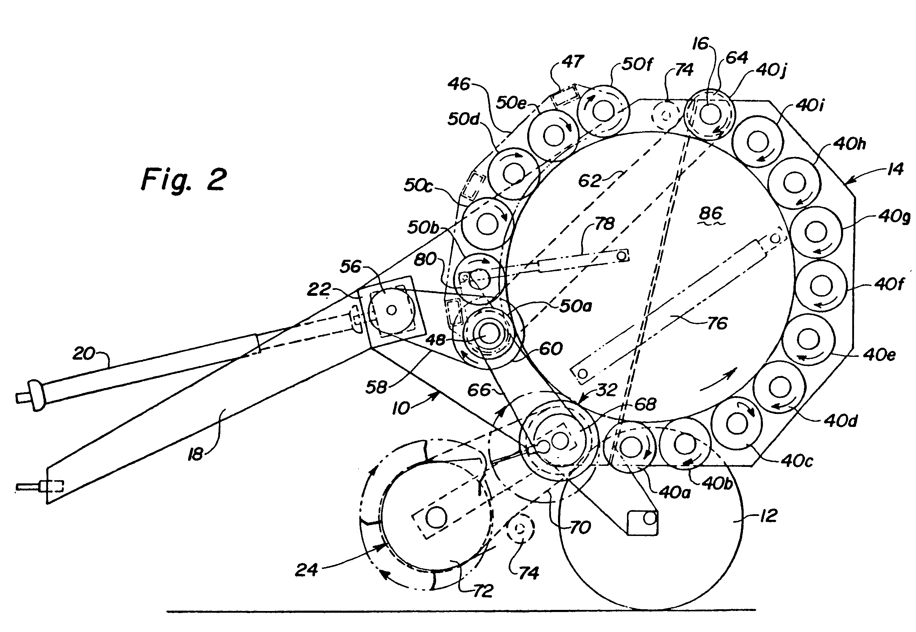

A pair of arms 46 is pivoted at one end on stub shafts 48 mounted in the side walls 11 of the base frame 10 for movement between a bale starting position shown in Fig. 1 and a full bale position shown in Fig. 2. The arms 46 are interconnected by beams 47 which extend transversely of the base frame 10. The arms 46 together with the beams 47 form a rigid frame of generally rectangular shape when seen in a direction perpendicular to the main dimensions of said frame. When viewed in side view, the arms 46 have a generally arcuate shape to correspond to the cylindrical full size bale chamber when the arms 46 are in the full bale position. Another set of rollers 50a through 50f is rotatably carried on the arms 46 and extends transversely between the arms 46. Spur gears 52 are fixed to one end of each of the rollers 50a through 50f on the inside of the adjacent arm 46, and intermediate gears 54 are rotatably carried on the inside of the same arm 46 in intermeshing engagement with the spur gears 52.

The rollers 40a through 40j and the rollers 50a through 50f each consist preferably of a hollow drumlike member formed of sheet metal mounted on a shaft which extends longitudinally of the drumlike member. The ends of the shaft project from the drumlike member and are rotatably mounted in suitable bearings disposed in either the sidewalls 15 of the rear frame 14 or in the arms 46. The shaft of the roller 40j is coaxial with the stub shafts 16, and the shaft of the roller 50a is coaxial with the stub shafts 48.

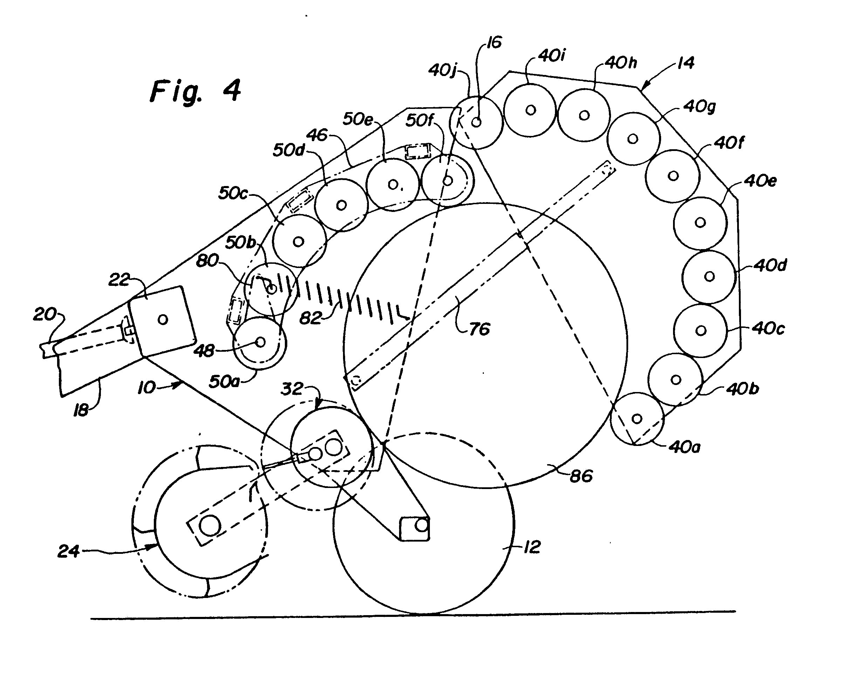

The drive system for operating the various parts of the baler is shown in Fig. 2. A sprocket 56 is fixed to the output shaft of the gearbox 22, and a chain 58 connects the sprocket 56 to a triple sprocket arrangement 60 which is fixed to the shaft of the roller 50a. A chain 62 connects the triple sprocket arrangement 60 to a sprocket 64 fixed to the shaft of the roller 40j. Another chain 66 connects the triple sprocket arrangement 60 to a sheave and sprocket combination 68 that is fixed to the shaft 35 of the feeder drum 32. A belt 70 connects the sheave and sprocket combination 68 to a sheave 72 on the pickup 24. Idlers 74 are provided to maintain proper tension in the chain 62 and in the belt 70. A pair of hydraulic cylinders 76 is connected between the side walls 11 of the base frame 10 and the side walls 15 of the rear frame 14. Another pair of hydraulic cylinders 78 is connected between 8 lever portions 80 of the arms 46 and the side walls 11 of the base frame 10. Alternately, as seen in Fig. 4, the hydraulic cylinders 78 may be replaced by a pair of springs 82 connected between the lever portions 80 of the arms 46 and the side walls 11 of the base frame 10.

Rotary driving power is delivered from the PTO of the tractor through the drive shaft 20 and the gearbox 22 to rotate the sprocket 56 in a clockwise direction as indicated in Fig. 2. This rotation of the sprocket 56 causes the triple sprocket arrangement 60 to be rotated clockwise by the chain 58, resulting in concurrent clockwise rotation of the roller 50a. Due to the spur gears 52 and the intermediate gears 54, the other rollers 50b through 50f carried on the arms 46 are also rotated clockwise. The roller 40j mounted in the rear frame 14 is rotated clockwise by the chain 62 and the sprocket 64. Due to the spur gears 42 and the intermediate gears 44, the remaining rollers 40a through 40i mounted in the rear frame 14 are also rotated clockwise. The feeder drum 32 is also caused to rotate in a clockwise direction by the chain 66 which, in turn, causes the fingers 34 to move along the path 38. The fingers 28 of the pickup 24 are caused to rotate in the path 30 by the belt 70.

When the baler is empty as seen in Fig. 1, the arms 46 are in their bale starting position and the rollers 50a through 50j cooperate with the feeder drum 32 and with the rollers 40a through 40d in the rear movable subframe 14 to define a bale starting chamber 84 which is elongated in a generally horizontal direction. The roller 50a is spaced from the feeder drum 32 a sufficient distance to provide an inlet 85 to the bale starting chamber 84. As the baler is pulled across the field by a tractor, the pickup fingers 28 and the fingers 34 of the feeder drum 32 deliver crop material into the bale starting chamber 84 through the inlet 85 to form the core of a roll bale. As the bale increases in diameter, the arms 46 are pivoted upwardly toward the full bale position of Fig. 2 against the force of the hydraulic cylinders 78 or against the force of the springs 82 in the modification shown in Fig. 4. It will be appreciated that in the arrangement according to Figures 1—3 and comprising the hydraulic cylinders 78, said cylinders are part of a hydraulic circuitry also comprising a pressure relief valve which is operable, during bale formation, to allow pressure fluid to drain from the cylinders 78 upon the bale, during its formation, exerting a predetermined back pressure on the arms 46. The pressure relief valve preferably is adjustable to allow the operator to vary the density of the bales being formed. A hydraulic circuitry of the type just described is generally known in the art and therefore is not shown in any details in the drawings nor is it described in any further details in the description.

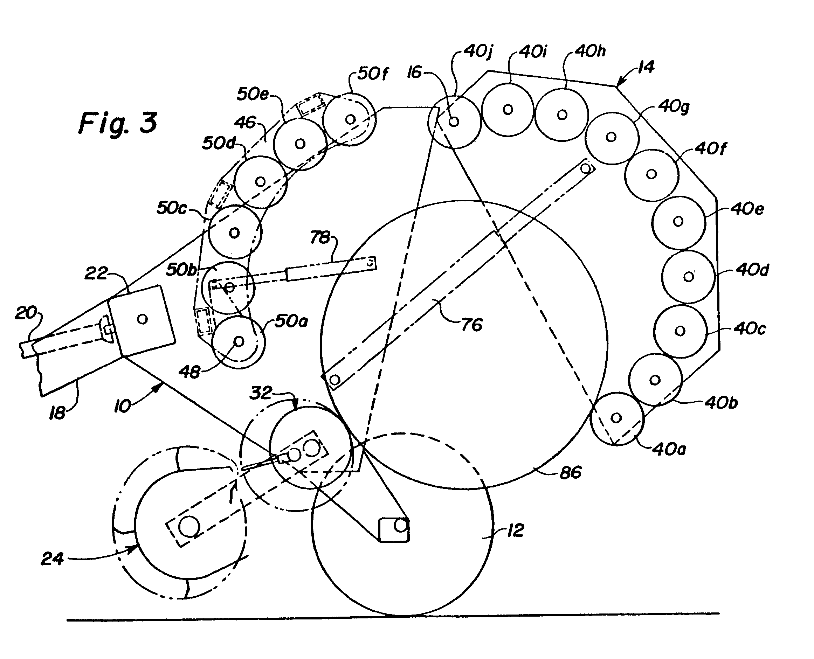

When a full bale 86 has been formed as shown in Fig. 2, and it is desired to discharge the bale, the hydraulic cylinders 76 are extended thereby pivoting the rear frame 14 upwardly as shown in Fig. 3. The hydraulic cylinders 78 may hold the arm 46 and the rollers 50a through 50f in the full bale position during discharge of the bale. Alternatively, when the springs 82 are used as shown in Fig. 4, the arms 46 and the rollers 50a through 50f are urged by the springs 82 toward the bale starting position to assist in discharging the bale. After the bale is discharged, the hydraulic cylinders 76 are contracted to move the rear frame or so-called tailgate 14 back to the position of Fig. 1 and the arms 46 are returned to the bale starting position so that the baler is ready to form another bale.

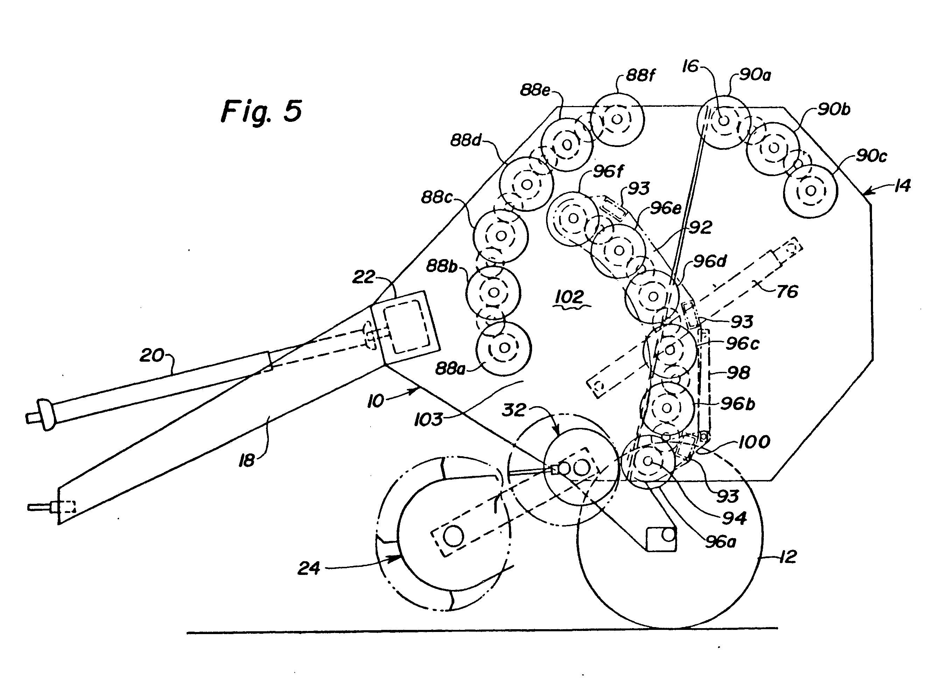

Referring now to Fig. 5, a round baler according to another embodiment of the present invention includes a set of rollers 88a through 88f rotatably mounted at fixed positions in the base frame 10 and extending transversely between the side walls 11 thereof. Another set of rollers 90a through 90c is rotatably mounted at fixed positions in the rear frame or tailgate 14 and extends transversely between the side walls 15 thereof. A pair of arms 92, which is similar to the pair of arms 46 previously described, is pivoted at one end on stub shafts 94 mounted in the side walls 15 of the rear movable subframe 14. The arms 92 are interconnected by beams 93. A further set of rollers 96a through 96f is rotatably carried by the arms 92 and extends transversely between the arms 92. A pair of hydraulic cylinders 98 is connected between lever portions 100 of the arms 92 and the side walls 15 of the rear frame 14.

The rollers 88a through 88f, 90a through 90c, and 96a through 96f are essentially of the same construction as the rollers 40a through 40j and 50a through 50f previously described. The shaft of the roller 90a is coaxial with the stub shafts 16, and the shaft of the roller 96a is coaxial with the stub shafts 94. The rollers of each set shown in the embodiment of Fig. 5 are interconnected by the same type of arrangement of spur gears and intermediate gears already described. The various parts of the baler of Fig. 5 are driven from the PTO of a tractor in the manner already described with the addition of another chain extending from a sprocket which drives the roller 90a to another sprocket which is fixed to the shaft of the roller 96a. The rollers 88a through 88f, 90a through 90c and 96a through 96f are each rotated in a clockwise direction as viewed in Fig. 5.

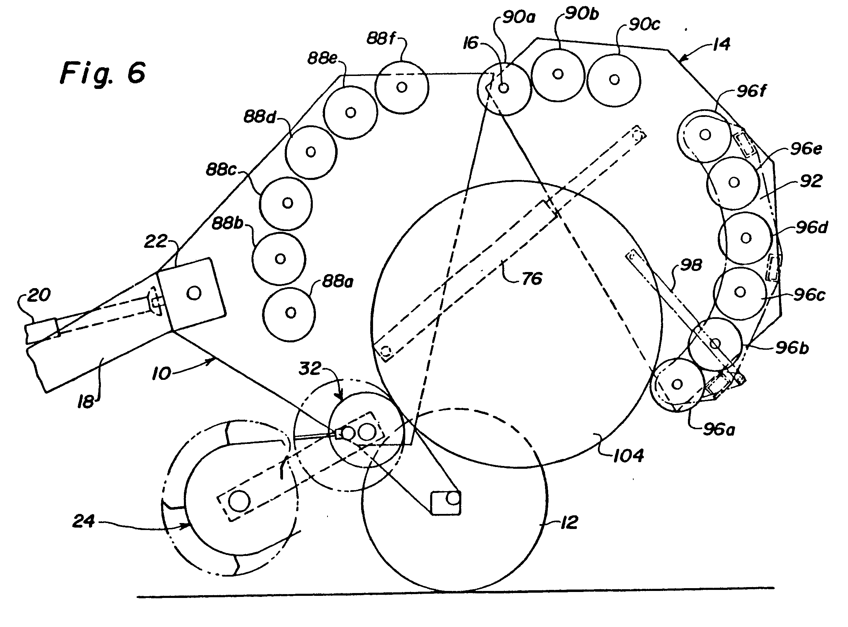

When the baler of Fig. 5 is empty, the arms 92 are in a bale starting position so that the rollers 96a through 96f carried thereon cooperate with the feeder drum 32 and with the rollers 88a through 88c to define a bale starting chamber 102 which is elongated in a generally vertical direction. The roller 88a is spaced from the feeder drum 32 a sufficient distance to provide an inlet 103 to the bale starting chamber 102. The pickup 24 and the feeder drum 32 deliver crop material into the bale starting chamber 102 through the inlet 103 to form the core of a roll bale. As the bale increases in diameter, the arms 92 are moved toward a full bale position against the force of the hydraulic cylinders 98. When a full bale has been formed and it is desired to discharge the bale, the hydraulic cylinders 76 are extended, thereby pivoting the movable subframe 14 upwardly as shown in Fig. 6. The hydraulic cylinders 98 hold the arms 92 and the rollers 96a through 96f in the full bale position during discharge of the bale 104. After the bale 104 is discharged, the hydraulic cylinders 76 are contracted to move the subframe 14 back to the position of Fig. 5 and the arms 92 are returned to the bale starting position so that the baler is ready to form another bale. The arrangement according to Figures 5, 6 and having the generally vertical bale starting chamber 102 is preferred over the baler having the generally horizontal bale starting chamber 84 as shown in Figures 1—4 for the simple reason that a vertical bale starting chamber has been found to be better for starting bale formation i.e. for starting core-forming.

While that the preferred structure as well as a number of variations thereof in which the principles of the present invention have been incorporated, are shown in the accompanying drawings and are described above, it is to be understood that the invention is not to be limited to the particular details thus presented, but, in fact, widely different means may be employed in the practice of the broader aspects of this invention.

It e.g. will be understood that in the round balers according to the embodiments of Figs. 1 and 5, the number of rollers in each set may be increased or decreased if desired. For example, in a modified form of the baler of Fig. 5, the roller 90c will be added to the set of rollers 96a to 96f carried on the arms 92. Also, the term "rollers" as used herein should not be limited to the particular type and shape of rollers 40a to 40j, 50a to 50f, 88a to 88f, 90a to 90c, and 96a to 96f disclosed herein. For example, the rollers may have a different shape. Furthermore, the rollers may be replaced by other bale forming members. The embodiments described so far with reference to the accompanying Figs. 1—4, respectively Figs. 5, 6 all comprise only one set of bale forming means in the form of rollers 50a through 50f, respectively 96a through 96f, which is movable between a bale starting position and a full bale position. However, it will be obvious from what precedes to one skilled in the art that first and second arm means may be pivotally mounted on the baler, each arm means carrying its own set of bale forming means in side-by-side relationship. Said bale forming means again preferably are in the form of rollers. The sets of bale forming means on the pivotally mounted first and second arm means cooperate with a further set of bale forming means mounted at fixed positions on the baler to form a roll bale of crop material. The first and second arm means are movable during bale formation between:

a bale starting position wherein the sets of bale forming means on the first and second arm means cooperate to form a bale starting chamber of reduced dimensions for starting bale formation, and

a full bale position wherein the sets of bale forming means on the first and second arm means cooperate with the set of fixedly positioned bale forming means to define a generally cylindrical bale forming chamber generally corresponding to a full size bale formed therein.

Preferably the first and second arm means are comparable in shape and dimensions with the pivotally mounted arm means 46, respectively 92 shown in Figures 1—4 respectively Figures 5, 6. Also the first arm means may be pivotally mounted on the base frame 10 via the stub shafts 48 shown in Figures 1—4, while that the second arm means may be pivotally mounted on the movable subframe 14 via the stub shafts 94 shown in Figures 5, 6. The arrangement is such that, when moved to the bale starting position, the first and second arm means are pivoted toward each other around their lower pivotal mountings to form a generally upright elongated bale starting chamber having, at the lower end thereof and adjacent the respective pivotal mountings, the feeder drum 32.

## Claims

1. A variable chamber round baler with a bale chamber which is expandable from a bale starting position wherein the bale chamber has reduced dimensions to a full bale position wherein the bale chamber is generally cylindrical in shape; said baler comprising:

first bale forming means (32, 40a—j/32, 88a—f, 90a—c) disposed at fixed positions generally circumferentially around a portion of the generally cylindrical full size bale chamber when the baler is in its bale forming condition and,

at least one arm structure (46/92) mounted for pivotal movement between an inner, bale starting position and an outer, full bale position and carrying second bale forming means (50a—f/ 96a—f); said second bale forming means (50a—f/ 96a—f), when positioned in the full bale position, cooperating with the first bale forming means (32, 40a—j/32, 88a—f, 90a—c) to define said generally cylindrical full size bale chamber, and being characterized in that:

the second bale forming means comprise a plurality of transversely extending rollers (50a—f/ 96a—f) disposed in a generally arcuately shaped pattern in side-by-side relationship adjacent to each other; said generally arcuately shaped pattern generally conforming to a portion of said generally cylindrical shape of the full size bale chamber and said rollers (50a—f/96a—f) of the second bale forming means, in effect, forming a generally continuous bale forming surface engaging the circumference of a bale during its formation in the bale chamber, and

the second bale forming means (50a—f; 96a—f) cooperate with only part of the first bale forming means (32, 40a—j/32, 88a—f, 90a—c) to form said bale starting chamber (84/102) of reduced dimensions.

2. A round baler according to claim 1, charaterized in that the first bale forming means are formed by a plurality of transversely extending rollers (32, 40a—j/32, 88a—f, 90a—c) rotatably mounted at fixed positions on the baler.

3. A round baler according to claim 1 or 2, characterized in that the arm structure (46/92) comprises a pair of transversely spaced apart arms which are pivotally mounted at one of their ends on the baler; said arms rotatably carrying the rollers of the second bale forming means (50a—f/96a—f) therebetween.

4. A round baler according to claim 3, characterized in that the arms (46/92) are generally arcuate in shape.

5. A round baler according to claim 3 or 4, characterized in that the arm structure (46/92) comprises transverse beams (47) interconnecting the arms (46/92) at spaced apart locations along the length thereof to form a rigid frame of generally rectangular shape as seen in a direction perpendicular to its main dimensions.

6. A round baler according to any of the preceding claims characterized in that positioning means (78, 82/98) are connected to the arm structure (46/92) for urging the latter into the bale starting position; said positioning means (78, 82/98) permitting pivotal movement of this arm structure (46/92) toward the full-bale position during bale formation.

7. A round baler according to claim 6, characterized in that the positioning means comprise at least one hydraulic cylinder (78/98) included in a hydraulic circuitry also comprising a pressure relief valve which is operable, during bale formation, to allow pressure fluid to drain from the at least one cylinder (78/98) upon the bale, during its formation, exerting a predetermined backpressure on the arm structure (46/92).

8. A round baler according to claim 6, characterized in that the positioning means comprise spring means (82) arranged to urge the arm structure (46/92) toward the bale starting position.

9. A round baler according to claim 2 or any of the claims 3 to 8 when appended to claim 2, characterized in that drive means (56, 58, 60, 48, 62, 64, 42, 44, 52, 54) are provided for rotating the rollers (32, 40a—j/32, 88a—f, 90a—c resp. 50a—f/96a—f) of the first and second bale forming means in the same direction.

10. A round baler according to claim 9, characterized in that the drive means (56, 58, 60, 48, 62, 64, 42, 44, 52, 54) include:

spur gears (42, 52) connected to the rollers (32, 40a—j/32, 88a—f, 90a—c resp. 50a—f/96a—f) of the first and second bale forming means and,

intermediate gears (44, 54) mounted in intermeshing engagement with the spur gears (42, 52).

11. A round baler according to any of the preceding claims and comprising a base frame (10) and a movable subframe (14) pivotally connected thereto for movement between a bale forming position and a bale discharge position and characterized in that:

at least some of the rollers of the first bale forming means (40a—j) are mounted at fixed positions on the movable subframe (14), and

the arm structure (46) with the second set of bale forming means (50a—f) thereon is mounted on the base frame (10) for pivotal movement between a retracted, generally fore-and-aft extending position defining, in part, an elongated generally horizontally oriented bale starting chamber (84) and a generally upright position defining together with the first bale forming means (40a—j) the full size cylindrical bale chamber.

12. A round baler according to any of the claims 1 to 10 and comprising a base frame (10) and a movable subframe (14) pivotally connected thereto for movement between a bale forming position and a bale discharge position and characterized in that:

at least some of the rollers (88a—f) of the first bale forming means (88a—f, 90a—c) are mounted at fixed positions on the base frame (10), and

the arm structure (92) with the second bale forming means (96a—f) thereon is mounted on the movable subframe (14) for pivotal movement between a retracted, generally upright position defining, in part, an elongated, generally upright oriented bale starting chamber (102) and an extended position defining together with the first bale forming means (88a—f, 90a—c) the full size cylindrical bale chamber.

13. A round baler according to claim 12, characterized in that some of the rollers (90a—c) of the first bale forming means (88a—f, 90a—c) are mounted at fixed positions on the movable subframe (14).

14. A round baler according to any of the claims 11 to 13 when appended to claim 2, characterized in that one of the fixedly positioned transversely extending rollers of the first bale forming means (32, 40a—j/32, 88a—f; 90a—c) is in the form of a feeder drum, (32) provided on the base frame (10) generally at the lower end of the bale chamber, said feeder drum (32) comprising:

a cylinder (33) mounted for rotation on said base frame (10), and

a plurality of fingers (34) which retract into and project from the cylinder (33) during rotation thereof.

15. A round baler according to claim 14 when appended to claim 11 characterized in that:

a bale chamber inlet (85) is defined between the feeder drum (32) and one roller (50a) of the second bale forming means (50a—f), and

the arm structure (46) is pivotally mounted on the base frame (10) adjacent said inlet (85).

16. A round baler according to claim 14 when made dependent from claim 12 characterized in that:

the feeder drum (32) together with an adjacent roller (88a) of the first bale forming means (88a—f, 90a—c) define an inlet (103) to the bale forming chamber therebetween, and

the arm structure (92) is pivotally mounted on the movable subframe (14) adjacent the feeder drum (32) and at the side thereof facing away from the inlet (103) when seen with the movable subframe (14) in the bale forming position.

17. A round baler according to any of the preceding claims characterized in that it further also comprises a further arm structure mounted for pivotal movement and carrying third bale forming means; said first and further arm structures, during bale formation being pivotally movable between:

inner bale starting positions wherein the second and third bale forming means cooperate with each other and with only part of the first bale forming means to form a bale starting chamber of reduced dimensions, and

outer full bale positions wherein the first, second and third bale forming means together define said generally cylindrical full size bale chamber.

18. A round baler according to claim 17, characterized in that the third bale forming means comprise a plurality of transversely extending rollers disposed in a generally arcuately shaped pattern in side-by-side relationship adjacent to each other; said generally arcuately shaped pattern generally conforming to a portion of said generally cylindrical shape of the full size bale chamber and said rollers of the third bale forming means, in effect, forming a generally continuous bale forming surface engaging the circumference of a bale during its formation in the bale chamber.

19. A round baler according to claim 17 or 18 when appended either directly or indirectly to claim 11 characterized in that the further arm structure with the third bale forming means thereon is pivotally mounted on the movable subframe.

**Patentansprüche**

1. Rundballenpresse mit veränderlicher Kammer, mit einer Ballenkammer, die ausgehend von einer Ballenausgangsposition, in der die Ballenkammer verringerte Abmessungen aufweist, auf eine den fertigen Ballen entsprechende Position ausdehnbar ist, in der die Ballenkammer eine allgemein zylindrische Form aufweist, wobei die Rundballenpresse folgende Teile umfaßt:

erste Ballenformungseinrichtungen (32, 40a—j/32, 88a—f, 90a—c), die an festen Positionen allgemein in Umfangsrichtung um einen Teil der allgemein zylindrischen, der vollen Größe entsprechend Ballenkammer herum angeordnet sind, wenn sich die Rundballenpresse in ihrem Ballenformungszustand befindet, und

zumindestens eine Armstruktur (46/92), die für eine Schwenkbewegung zwischen einer inneren Ballenanfangsposition und einer äußeren, dem fertigen Ballen entsprechenden Position befestigt ist und zweite Ballenformungseinrichtungen (50a—f/96a—f) trägt, wobei die zweiten Ballenformungseinrichtungen (50a—f/96a—f) in ihrer dem fertigen Ballen entsprechenden Position mit den ersten Ballenformungseinrichtungen (32, 40a—j/32, 88a—f, 90a—c) zusammenwirken, um die allgemein zylindrische, der vollen Größe entsprechende Ballenkammer zu umgrenzen, dadurch gekennzeichnet, daß:

die zweiten Ballenformungseinrichtungen eine Mehrzahl von sich in Querrichtung erstreckenden Walzen (50a—f/96a—f) umfassen, die in einem allgemein bogenförmigen Muster in Seite an Seite angeordneter Beziehung benachbart zueinander angeordnet sind, wobei das allgemein bogenförmig geformte Muster allgemein mit einem Teil der allgemein zylindrischen Form der der vollen Größe entsprechenden Ballenkammer übereinstimmt und die Walzen (50a—f/96a—f) der zweiten Ballenformungseinrichtungen im Ergebnis eine allgemein kontinuierliche Ballenformungsoberfläche bilden, die mit dem Umfang des Ballens während seiner Bildung in der Ballenkammer in Eingriff kommt, und

die zweiten Ballenformungseinrichtungen (50a—f/96a—f) mit lediglich einem Teil der ersten Ballenformungseinrichtungen (32, 40a—j/32, 88a—f, 90a—c) zusammenwirken, um die Ballenanfangskammer (84/102) mit verringerten Abmessungen zu bilden.

2. Rundballenpresse nach Anspruch 1, dadurch gekennzeichnet, daß die ersten Ballenformungseinrichtungen durch eine Mehrzahl von sich in Querrichtung erstreckenden Walzen (32, 40a—j/32, 88a—f, 90a—c) gebildet sind, die drehbar auf festen Positionen an der Rundballenpresse befestigt sind.

3. Rundballenpresse nach Anspruch 1 oder 2, dadurch gekennzeichnet, daß die Armstruktur (46/92) zwei mit Querabstand angeordnete Arme umfaßt, die schwenkbar mit ihrem einen Ende an der Rundballenpresse befestigt sind, und daß die Arme drehbar die Walzen der zweiten Ballenformungseinrichtungen (50a—f/96a—f) zwischen sich tragen.

4. Rundballenpresse nach Anspruch 3, dadurch gekennzeichnet, daß die Arme (46/92) eine allgemein bogenförmige Form aufweisen.

5. Rundballenpresse nach Anspruch 3 oder 4, dadurch gekennzeichnet, daß die Armstruktur (46/92) Querträger (47) umfaßt, die die Arme (46/92) an mit Abstand voneinander angeordneten Stellen entlang deren Länge miteinander verbinden, um einen starren Rahmen mit allgemein rechtwinkliger Form bei Betrachtung in einer Richtung senkrecht zu seinen Hauptabmessungen zu bilden.

6. Rundballenpresse nach einem der vorhergehenden Ansprüche, dadurch gekennzeichnet, daß Positioniereinrichtungen (78, 82/98) mit der Armstruktur (46/92) verbunden sind, um diese in die Ballenausgangsposition zu drücken, und daß die Positioniereinrichtungen (78, 82/98) eine Schwenkbewegung dieser Armstruktur (46/92) während der Ballenformung in Richtung auf die dem fertigen Ballen entsprechende Position ermöglichen.

7. Rundballenpresse nach Anspruch 6, dadurch gekennzeichnet, daß die Positioniereinrichtungen zumindestens einen Hydraulikzylinder (78/98) umfassen, der in einen Hydraulikkreis eingefügt ist, der weiterhin ein Druckentlastungsventil einschließt, das während der Ballenformung so betätigbar ist, daß Strömungsmitteldruck aus dem zumindestens einen Zylinder (78/98) ausströmen kann, wenn der Ballen während seiner Bildung einen vorgegebenen Gegendruck auf die Armstruktur (46/92) ausübt.

8. Rundballenpresse nach Anspruch 6, dadurch gekennzeichnet, daß die Positioniereinrichtungen Federeinrichtungen (82) umfassen, die so angeordnet sind, daß sie die Armstruktur (46/92) in Richtung auf die Ballenanfangsposition drücken.

9. Rundballenpresse nach Anspruch 2 oder einem der Ansprüche 1 bis 8 unter Rückbeziehung auf Anspruch 2, dadurch gekennzeichnet, daß Antriebseinrichtungen (56, 58, 60, 48, 62, 64, 42, 44, 52, 54) zum Drehen der Walzen (32, 40a—j/32, 88a—f, 90a—c bzw. 50a—f/96a—f) der ersten und zweiten Ballenformungseinrichtungen in der gleichen Richtung vorgesehen sind.

10. Rundballenpresse nach Anspruch 9, dadurch gekennzeichnet, daß die Antriebseinrichtungen (56, 58, 60, 48, 62, 64, 42, 44, 52, 54) folgende Teile einschließen:

Stirnzahnräder (42, 52), die mit den Walzen (32, 40a—j/32, 88a—f, 90a—c bzw. 50a—f/96a—f) der ersten und zweiten Ballenformungseinrichtungen verbunden sind, und

Zwischenzahnräder (44, 54) die in kämmendem Eingriff mit den Stirnzahnrädern (42, 52) befestigt sind.

11. Rundballenpresse nach einem der vorhergehenden Ansprüche, mit einem Grundrahmen (10) und einem damit schwenkbar für eine Bewegung zwischen einer Ballenformungsposition und einer Ballenauswurfposition verbundenen beweglichen Hilfsrahmen (14), dadurch gekennzeichnet, daß

zumindestens einige der Walzen der ersten Ballenformungseinrichtungen (40a—40j) an festen Positionen auf dem beweglichen Hilfsrahmen (14) befestigt sind, und

die Armstruktur mit dem daran angeordneten zweiten Satz von Ballenformungseinrichtungen (50a—f) an dem Grundrahmen (10) für eine Schwenkbewegung zwischen einer zurückgezogenen, sich allgemein in Längsrichtung erstreckenden Position, die teilweise eine langgestreckte allgemein horizontal ausgerichtete Ballenanfangskammer (84) bildet, und einer allgemein aufrecht stehenden Position befestigt ist, in der sie zusammen mit den ersten Ballenformungseinrichtungen (40a—j) die der vollen Größe entsprechende zylindrische Ballenkammer umgrenzt.

12. Rundballenpresse nach einem der Ansprüche 1 bis 10, die einen Grundrahmen (10) und einen mit diesem schwenkbar für eine Bewegung zwischen einer Ballenformungsposition und einer Ballenauswurfposition verbundenen beweglichen Hilfsrahmen (14) aufweist, dadurch gekennzeichnet, daß:

zumindestens einige der Walzen (88a—f) der ersten Ballenformungseinrichtungen (88a—f, 90a—c) an festen Positionen auf dem Grundrahmen (10) befestigt sind, und

die Armstruktur (92) mit den daran angeordneten zweiten Ballenformungseinrichtungen (96a—f) auf dem beweglichen Hilfsrahmen (14) für eine Schwenkbewegung zwischen einer zurückgezogenen, allgemein aufrecht stehenden Position, in der teilweise eine langgestreckte, allgemein nach oben ausgerichtete Ballenanfangskammer (102) gebildet wird, und einer ausgefahrenen Position befestigt ist, in der sie zusammen mit den ersten Ballenformungseinrichtungen (88a—f, 90a—c) die der vollen Größe entsprechende zylindrische Ballenkammer umgrenzt.

13. Rundballenpresse nach Anspruch 12, dadurch gekennzeichnet, daß einige der Walzen (90a—c) der ersten Ballenformungseinrichtungen (88a—f, 90a—c) an festen Positionen auf dem beweglichen Hilfsrahmen (14) befestigt sind.

14. Rundballenpresse nach einem der Ansprüche 11 bis 13 unter Rückbeziehung auf Anspruch 2, dadurch gekennzeichnet, daß eine der an festen Positionen angeordneten, sich an Querrichtung erstreckenden Walzen der ersten Ballenformungseinrichtungen (32, 40a—j/32, 88a—f; 90a—c) die Form einer Zuführungstrommel (32) aufweist, die auf dem Grundrahmen (10) allgemein am unteren Ende der Ballenkammer vorgesehen ist, wobei die Zuführungstrommel (32) folgende Teile umfaßt:

einen Zylinder (33), der drehbar auf dem Grundrahmen (10) befestigt ist, und

eine Mehrzahl von Fingern (34), die während der Drehung des Zylinders (33) in diesen eingezogen werden und aus diesem vorspringen.

15. Rundballenpresse nach Anspruch 14 unter Rückbeziehung auf Anspruch 11, dadurch gekennzeichnet, daß

ein Ballenkammereinlaß (85) zwischen der Zuführungstrommel (32) und einer Walze (50a) der zweiten Ballenformungseinrichtungen (50a—f) ausgebildet ist, und

die Armstruktur (46) schwenkbar an dem Grundrahmen (10) benachbart zu dem Einlaß (85) befestigt ist.

16. Rundballenpresse nach Anspruch 14 unter Rückbeziehung auf Anspruch 12, dadurch gekennzeichnet, daß

die Zuführungstrommel (32) zusammen mit einer benachbarten Walze (88a) der ersten Ballenformungseinrichtungen (88a—f, 90a—c) zwischen sich einen Einlaß (103) für die Ballenformungskammer bildet, und

die Armstruktur (92) schwenkbar an dem beweglichen Hilfsrahmen (14) benachbart zur Zuführungstrommel (32) und an dessen von dem Einlaß (103) fortgerichteter Seite bei Betrachtung mit in der Ballenformungsposition befindlichen beweglichen Hilfsrahmen (14) befestigt ist.

17. Rundballenpresse nach einem der vorhergehenden Ansprüche, dadurch gekennzeichnet, daß sie außerdem eine weitere Armstruktur umfaßt, die für eine Schwenkbewegung befestigt ist und dritte Ballenformungseinrichtungen trägt, wobei die erste und die weitere Armstruktur während der Ballenformung zwischen folgenden Positionen verschwenkbar sind:

inneren Ballenanfangspositionen, in denen die zweiten und dritten Ballenformungseinrichtungen miteinander und mit lediglich einem Teil der Ballenformungseinrichtungen zusammenwirken, um eine Ballenanfangskammer mit verringerten Abmessungen zu bilden, und

äußeren, dem fertigen Ballen entsprechenden Positionen, in denen die ersten, zweiten und dritten Ballenformungseinrichtungen zusammen die allgemein zylindrische, der vollen Größe entsprechende Ballenkammer umgrenzen.

18. Rundballenpresse nach Anspruch 17, dadurch gekennzeichnet, daß die dritten Ballenformungseinrichtungen eine Mehrzahl von sich in Querrichtung erstreckenden Walzen umfassen, die in einem allgemein bogenförmigen Muster in einer Seite an Seite zueinander angeordneten Beziehung benachbart zueinander angeordnet sind, wobei das allgemein bogenförmige Muster allgemein mit einem Teil der allgemein zylindrischen Form der der vollen Größe entsprechenden Ballenkammer übereinstimmt und wobei die Walzen der dritten Ballenformungseinrichtungen im Ergebnis eine allgemein kontinuierliche Ballenformungsoberfläche bilden, die mit dem Umfang eines Ballens während dessen Bildung in der Ballenkammer in Eingriff steht.

19. Rundballenpresse nach Anspruch 17 oder 18 unter Rückbeziehung entweder direkt oder indirekt auf Anspruch 11, dadurch gekennzeichnet, daß die weitere Armstruktur mit den daran angeordneten dritten Ballenformungseinrichtungen schwenkbar auf dem beweglichen Hilfsrahmen befestigt ist.

**Revendications**

1. Ramasseuse-presse à balles rondes et à chambre variable, équipée d'une chambre à balles extensible d'une position de commencement de balles dans laquelle la chambre à balles possède des dimensions réduites, à une position de balles finies dans laquelle la chambre à balles présente une forme, dans l'ensemble, cylindrique, ladite ramasseuse-presse à balles comportant:

— des premiers moyens de formage de balles (32, 40a—j/32, 88a—f, 90a—c) disposés au niveau de points fixes, d'une manière générale, circonférentiellement autour d'une partie de la chambre à balles de dimensions finies, dans l'ensemble, cylindrique, lorsque la ramasseuse-presse à balles est dans son état de formage de balles et,

— au moins une structure de bras (46/92) montée en vue d'opérer un mouvement de pivotement entre une position intérieure de commencement de balles, et une position extérieure de balles finies, et portant des seconds moyens de formage de balles (50a—f/96a—f); lesdits seconds moyens de formage de balles (50a—f/96a—f) coopérant, lorsqu'ils sont placés dans la position de balles finies, avec les premiers moyens de formage de balles (32, 40a—j/32, 88a—f, 90a—c), pour définir ladite chambre à balles de dimensions finies, dans l'ensemble, cylindrique, et caractérisée en ce que:

— les seconds moyens de formage de balles comportent plusieurs rouleaux (50a—f/96a—f) qui s'étendent transversalement et sont disposés suivant une configuration de forme sensiblement arquée dans un relation côte-à-côte à proximité les uns des autres; ladite configuration de forme sensiblement arquée correspondant, d'une manière générale, à une partie de ladite forme, dans l'ensemble, cylindrique de la chambre à balles de dimensions finies, tandis que lesdits rouleaux (50a—f/96a—f) des seconds moyens de formage de balles définissent, en fait, une surface de formage de balles sensiblement continue qui vient en contact avec la circonférence d'une balle pendant son formage dans la chambre à balles, et en ce que

— les seconds moyens de formage de balles (50a—f/96a—f) ne coopèrent qu'avec une partie des premiers moyens de formage de balles (32, 40a—j/32, 88a—f, 90a—c) pour définir ladite chambre de commencement de balles (84/102) de dimensions réduites.

2. Ramasseuse-presse à balles rondes selon la revendication 1, caractérisée en ce que les premiers moyens de formage de balles sont constitués par plusieurs rouleaux (32, 40a—j/32, 88a—f, 90a—c) qui s'étendent transversalement et sont montés rotatifs au niveau de points fixes sur la ramasseuse-presse à balles.

3. Ramasseuse-presse à balles rondes selon la revendication 1 ou 2, caractérisée en ce que la structure de bras (46/92) comporte deux bras espacés l'un de l'autre transversalement qui, au niveau de l'une de leurs extrémités, sont montés pivotants sur la ramasseuse-presse à balles; lesdits bras portant entre eux, mobiles en rotation, les rouleaux des seconds moyens de formage de balles (50a—f/96a—f).

4. Ramasseuse-presse à balles rondes selon la revendication 3, caractérisée en ce que les bras (46, 92) ont, dans l'ensemble, une forme arquée.

5. Ramasseuse-presse à balles rondes selon la revendication 3 ou 4, caractérisée en ce que la structure de bras (46/92) comporte des poutres transversales (47) qui relient les bras (46/92) entre eux au niveau de points espacés les uns des autres tout le long de ceux-ci, pour définir une armature rigide de forme sensiblement rectangulaire, lorsqu'on la considère dans une direction perpendiculaire à ses dimensions principales.

6. Ramasseuse-presse à balles rondes selon l'une quelconque des revendications précédentes, caractérisée en ce que des moyens positionneurs (78, 82/98) sont accouplés avec la structure de bras (46/92) pour solliciter cette dernière dans la position de commencement de balle; lesdits moyens positionneurs (78, 82/98) permettant un mouvement de pivotement de cette structure de bras (46/92) en direction de la position de balles finies, pendant le formage d'une balle.

7. Ramasseuse-presse à balles rondes selon la revendication 6, caractérisée en ce que les moyens positionneurs comportent au moins un cylindre hydraulique (78/98) intégré dans un circuit hydraulique comprenant également une soupape de détente apte à opérer pour, pendant le formage d'une balle, permettre à un fluide sous pression de s'écouler hors du ou des cylindres (78/98), au moment où la balle, pendant son formage, exerce une contre-pression prédéterminée sur la structure de bras (46/92).

8. Ramasseuse-presse à balles rondes selon la revendication 6, caractérisée en ce que les moyens positionneurs comportent des moyens élastiques (82) conçus pour solliciter la structure de bras (46/92) en direction de la position de commencement de balles.

9. Ramasseuse-presse à balles rondes selon la revendication 2 ou l'une quelconque des revendications 3 à 8, lorsqu'elles sont dépendantes de la revendication 2, caractérisée en ce qu'il est prévu des moyens d'entraînement (56, 58, 60, 48, 62, 64, 42, 44, 52, 54) pour faire tourner les rouleaux (32, 40a—j/32, 88a—f, 90a—c, respectivement 50a—f/96a—f) des premiers et seconds moyens de formage de balles dans la même direction.

10. Ramasseuse-presse à balles rondes selon la revendication 9, caractérisée en ce que les moyens d'entraînement (56, 58, 60, 48, 62, 64, 42, 44, 52, 54) comportent:

— des pignons droits (42, 52) reliés aux rouleaux (32, 40a—j/32, 88a—f, 90a—c, respectivement 50a—f/96a—f) des premiers et seconds moyens de formage de balles et

— des pignons intermédiaires (44, 54) montés dans une relation d'engrènement avec les pignons droits (42, 52).

11. Ramasseuse-presse à balles rondes selon l'une quelconque des revendications précédentes et comportant un châssis de base (10) et un châssis auxiliaire mobile (14) relié d'une manière pivotante à celui-ci, en vue d'un déplacement entre une position de formage de balles et une position de déchargement de balles et caractérisée en ce que:

— certains au moins des rouleaux des premiers moyens de formage de balles (40a—j) sont montés au niveau de points fixes sur le châssis auxiliaire mobile (14), et en ce que

— la structure de bras (46) qui porte sur elle la seconde série de moyens de formage de balles (50a—f) est montée sur le châssis de base (10), en vue d'opérer un mouvement de pivotement entre une position rétractée qui s'étend, d'une manière générale, longitudinalement et définit, en partie, une chambre de commencement de balles allongée (84) orientée sensiblement horizontalement, et une position, dans l'ensemble, verticale qui, conjointement avec les premiers moyens de formage de balles (40a—j), définit la chambre à balles de dimensions finies cylindrique.

12. Ramasseuse-presse à balles rondes selon l'une quelconque des revendications 1 à 10 et comportant un châssis de base (10) et un châssis auxiliaire mobile (14) relié d'une manière pivotante à celui-ci, en vue d'un déplacement entre une position de formage de balles et une position de déchargement de balles et caractérisée en ce que:

— certains au moins des rouleaux (88a—f) des premiers moyens de formage de balles (88a—f, 90a—c) sont montés au niveau de points fixes sur le châssis de base (10), et en ce que

— la structure de bras (92) qui porte sur elle les seconds moyens de formage de balles (96a—f) est montée sur le châssis auxiliaire mobile (14), en vue d'opérer un mouvement de pivotement entre une position rétractée, dans l'ensemble, verticale qui définit, en partie, une chambre de commencement de balles allongée (102) orientée sensiblement verticalement, et une position étendue qui, conjointement avec les premiers moyens de formage de balles (88a—f, 90a—c), définit la chambre à balles de dimensions finies cylindrique.

13. Ramasseuse-presse à balles rondes selon la revendication 12, caractérisée en ce que certains des rouleaux (90a—c) des premiers moyens de formage de balles (88a—f, 90a—c) sont montés au niveau de points fixes sur le châssis auxiliaire mobile (14).

14. Ramasseuse-presse à balles rondes selon l'une quelconque des revendications 11 à 13, lorsqu'elles sont dépendantes de la revendication 2, caractérisée en ce que l'un des rouleaux s'étendant transversalement et positionnés d'une manière fixe des premiers moyens de formage de balles (32, 40a—j/32, 88a—f; 90a—c) se présente sous la forme d'un tambour de chargement (32) disposé sur le châssis de base (10), d'une manière générale, au niveau de l'extrémité inférieure de la chambre à balles, ledit tambour de chargement (32) comportant:

— un cylindre (33) monté en vue d'une rotation sur ledit châssis de base (10), et

— plusieurs doigts (34) qui se rétractent dans le cylindre (33) et font saillie hors de celui-ci, pendant sa rotation.

15. Ramasseuse-presse à balles rondes selon la revendication 14, lorsqu'elle est dépendante de la revendication 11, caractérisée en ce que:

— un orifice d'entrée de chambre à balles (85) est défini entre le tambour de chargement (32) et l'un (50a) des rouleaux des seconds moyens de formage de balles (50a—f), et en ce que

— la structure de bras (46) est montée pivotante sur le châssis de base (10), à proximité dudit orifice d'entrée (85).

16. Ramasseuse-presse à balles rondes selon la revendication 14, lorsqu'elle est rendue dépendante de la revendication 12, caractérisée en ce que:

— le tambour de chargement (32) ainsi qu'un rouleau adjacent (88a) des premiers moyens de formage de balles (88a—f, 90a—c) définissent entre eux un orifice d'entrée (103) dans la chambre de formage de balles, et en ce que

— la structure de bras (92) est montée pivotante sur le châssis auxiliaire mobile (14), à proximité du tambour de chargement (32) et au niveau du côté de celui-ci qui est tourné à l'opposé de l'orifice d'entrée (103), lorsqu'on la considère tandis que le châssis auxiliaire mobile (14) est dans la position de formage de balles.

17. Ramasseuse-presse à balles rondes selon l'une quelconque des revendications précédentes, caractérisée en ce qu'elle comporte, en outre, une seconde structure de bras montée en vue d'un mouvement de pivotement et portant des troisièmes moyens de formage de balles; lesdites première et seconde structures de bras étant, pendant le formage d'une balle, aptes à se déplacer par pivotement entre:

— des positions intérieures de commencement de balles dans lesquelles les seconds et troisièmes moyens de formage de balles coopèrent les uns avec les autres et avec une partie seulement des premiers moyens de formage de balles, pour définir une chambre de commencement de balles de dimensions réduites, et

— des positions extérieures de balle finie dans lesquelles les premiers, seconds et troisièmes moyens de formage de balles définissent conjointement ladite chambre à balles de dimensions finies, dans l'ensemble, cylindrique.

18. Ramasseuse-presse à balles rondes selon la revendication 17, caractérisée en ce que les troisièmes moyens de formage de balles comportent plusieurs rouleaux qui s'étendent transversalement et sont disposés suivant une configuration de forme sensiblement arquée dans une relation côte à côte à proximité les uns des autres; ladite configuration de forme sensiblement arquée correspondant, d'une manière générale, à une partie de ladite forme, dans l'ensemble, cylindrique de la chambre à balles de dimensions finies, tandis que lesdits rouleaux des troisièmes moyens de formage de balles définissent, en fait, une surface de formage de balles sensiblement continue qui vient en contact avec la circonférence d'une balle pendant son formage dans la chambre à balles.

19. Ramasseuse-presse à balles rondes selon la revendication 17 ou 18, lorsqu'elle est, directement ou indirectement, dépendante de la revendication 11, caractérisée en ce que la seconde structure de bras qui porte sur elle les troisièmes moyens de formage de balles, est montée pivotante sur le châssis auxiliaire mobile.

Fig. 1

EP 0 161 726 B1

Fig. 2

*Fig. 3*

Fig. 4

Fig. 5

Fig. 6

EP 0 161 726 B1